# EUROPÄISCHE PATENTSCHRIFT

(11) **EP 1 080 864 B1**
(45) Veröffentlichungstag und Bekanntmachung des Hinweises auf die Patenterteilung: **10.11.2004**
(21) Anmeldenummer: 00115118.2
(22) Anmeldetag: 12.07.2000
(51) Int. Cl.: B29C 47/10

(54) **Vorrichtung zum Zuführen von Schüttgut**
Apparatus for feeding of bulk material
Dispositif pour l'alimentation de matière en vrac

(30) Priorität: 03.09.1999 DE 19941920
(43) Veröffentlichungstag der Anmeldung: 07.03.2001
(73) Patentinhaber: AZO GmbH & Co, D-74706 Osterburken (DE)
(72) Erfinder: Link, Otmar, 74722 Buchen-Götzingen (DE); Bauer, Helmut, 74743 Seckach-Klinge (DE)
(74) Vertreter: Lichti, Heiner, Dipl.-Ing.

(56) Entgegenhaltungen:
- EP-A- 0 246 568
- EP-A- 0 472 949
- EP-B- 0 432 190
- GB-A- 2 162 117

## Beschreibung

Die Erfindung betrifft eine Vorrichtung zum Zuführen von Schüttgut zu einer Abgabestelle, bestehend aus einem Wiegebehälter mit einer Massen-Erfassungseinrichtung und einem an den Auslauf des Wiegebehälters angeschlossenen Zuführrohr, das zentral in einen Übergabetrichter mündet und an seinem Abgabeende zum Aufstauen und Umlenken des ablaufenden Schüttgutes nach außen eingerichtet ist.

Im Sinne der Erfindung ist "Abgabestelle" eine Stelle der Vorrichtung, wo das Schüttgut beispielsweise einer Verarbeitungsmaschine, z.B. einem Extruder im Falle von Kunststoffgranulat, einem Mischer, einer Verpackungsmaschine, einer Fördereinrichtung od. dgl. zugeführt wird. Um den Massendurchsatz bei einer solchen Schüttgutzuführung zu erfassen, weist die Vorrichtung einen Wiegebehälter auf, dem das Schüttgut beispielsweise aus einem oder mehreren Vorratsbehältern oder Abscheidern einer pneumatischen Förderanlage chargenweise aufgegeben wird. Dem Wiegebehälter ist eine Massen-Erfassungseinrichtung zugeordnet, um den Massendurchsatz zu erfassen. Aus dem Wiegebehälter läuft das Schüttgut in den Übergabetrichter, dessen Ablauf die Abgabestelle bildet. In der Regel wird das Schüttgut in dem Übergabetrichter aufgestaut und aus diesem entsprechend dem Bedarf der nachgeschalteten Maschine, Einrichtung od. dgl. abgezogen.

In vielen Einsatzfällen sind mehrere Schüttgutkomponenten zuzuführen. In diesem Fall wird die Hauptkomponente mit dem größten Massenanteil über das Zuführrohr an den Übergabetrichter abgegeben, während die anderen Komponenten über radiale Zuführungen, beispielsweise mittels Dosierschnecken od. dgl. aufgegeben werden, wobei im Übergabetrichter bis zur Abgabestelle gegebenenfalls eine Vormischung der Komponenten stattfindet. Der Transport des Schüttgutes durch das Zuführrohr in den Übergabetrichter erfolgt im Fallstrom, wobei das Schüttgut aufgestaut werden muß, um am Abgabeende einen kontinuierlichen Ablauf zu garantieren. Der Schüttgutablauf selbst wird dann wesentlich durch die Fließeigenschaften des Schüttgutes bestimmt. Beim Ablauf des Schüttgutes müssen Reaktionskräfte auf den Wiegebehälter vermieden werden, um die Massemessung nicht zu verfälschen: Aus den vorgenannten Gründen wird das Schüttgut am unteren Ende des Zuführrohrs aufgestaut und nach außen abgelenkt, so daß Vertikalkräfte auf den Wiegebehälter weitestgehend ausgeschlossen werden.

Bei einer bekannten Vorrichtung (EP 0 432 190 B1) gelangt das Schüttgut aus dem Auslauf des Wiegebehälters unmittelbar in den Übergabetrichter. Zum Ablenken des Schüttgutstroms nach außen, ist unterhalb des Auslaufs und innerhalb des Übergabetrichters ein zum Wiegebehälter achsgleicher Kegel angeordnet, der zwischen sich und dem Mündungsrand des Auslaufs einen Auslaufspalt bildet, durch den das Schüttgut über die Kegelfläche nach außen gelenkt wird. Der Spalt ist durch eine verstellbare Aufhängung des Kegels am Wiegebehälter einstellbar.

Bei einer anderen bekannten Vorrichtung (EP 0 472 949 B1) zur Zuführung von zwei Schüttgut-Komponenten, z.B. verschiedener oder verschiedenfarbiger Kunststoffgranulate zu einem Extruder, wird die Hauptkomponente aus dem Wiegebehälter über das Zuführrohr zentral in den Übergabetrichter übergeben. Auch hier ist dem unten offenen Zuführrohr ein kegeliger Staukörper zugeordnet, der die Hauptkomponente zur Seite hin ablenkt. Die zweite Komponente wird über eine radiale Zuführung, z.B. eine Dosierschnecke, in den Übergabetrichter übergeben.

Beide bekannten Vorrichtungen sind aufgrund des verstellbaren Kegels unterhalb des Auslaufs konstruktiv aufwendig. Bei der Vorrichtung zum Zuführen mehrerer Komponenten (EP 0 472 949 B1) weist der Übergabetrichter ein unteres zylindrisches Teil auf und reicht das Zuführrohr bis in diesen zylindrischen Teil, während die weitere Komponente in den darüber befindlichen trichterförmigen Teil zugespeist wird und auf den annähernd ebenen Gutspiegel der im zylindrischen Teil aufgestauten Hauptkomponente aufläuft. Hier kann es insbesondere abhängig von den unterschiedlichen Fließeigenschaften der Komponenten zu Unregelmäßigkeiten in der Zuführung der weiteren Komponenten an die Abgabestelle kommen.

Der Erfindung liegt die Aufgabe zugrunde, die bekannte Vorrichtung in konstruktiver Hinsicht zu vereinfachen und zugleich sicherzustellen, daß bei der Zuführung mehrerer Komponenten im Übergabetrichter ein gleichmäßiger Massenfluß aller Komponenten zur Abgabestelle erfolgt.

Diese Aufgabe wird erfindungsgemäß zunächst dadurch gelöst, daß das Zuführrohr an seinem Abgabeende zumindest teilweise geschlossen und an seinem darüber befindlichen Rohrmantel mit Ablauföffnungen versehen ist, die am Umfang gleichmäßig verteilt sind.

Die für die Entkopplung des Schüttgutstroms vom Wiegebehälter notwendigen Maßnahmen sind bei der erfindungsgemäßen Ausbildung unmittelbar an dem Zuführrohr verwirklicht, ohne daß zusätzliche Bauteile notwendig sind. Es entfallen folglich Fertigungs-, Montage- und Wartungskosten. Durch die Maßnahme, das Zuführrohr an seinem Abgabeende zumindest teilweise zu verschließen, wird das Schüttgut im Zuführrohr soweit aufgestaut, daß die überwiegende Masse des Schüttgutes über die darüber befindlichen Ablauföffnungen in den Übergabetrichter ausläuft, wobei dieser größere Teil des Schüttgutes auf dem unmittelbar darunter im Zuführrohr aufgestauten Schüttgut zur Seite hin umgelenkt wird.

Das Zuführrohr kann an seinem Abgabeende auch vollständig verschlossen, z.B. mit einem Blindflansch versehen sein. Vorzugsweise ist jedoch vorgesehen, daß das Zuführrohr an seinem Abgabeende zu einem zentralen Ablauf konisch eingezogen ist, wobei der Querschnitt des Ablaufs nennenswert kleiner ist als der Querschnitt des Zuführrohrs.

Durch den gegenüber dem Rohrquerschnitt nennenswert kleineren Querschnitt des Ablaufs läuft nur eine kleine Teilmenge des Schüttgutes senkrecht aus, ohne daß es zu Reaktionskräften auf den Wiegebehälter kommt. Diese Ausführung hat zudem den Vorteil, daß der Wiegebehälter und das Zuführrohr problemlos vollständig entleert werden können.

Der Querschnitt des Ablaufs ist zumindest um ein Drittel kleiner als der Querschnitt des Zuführrohrs und liegt vorzugsweise bei nur etwa 5% desselben, so daß nur ein annähernd entsprechender Massenanteil durch den zentralen Ablauf des Zuführrohrs in den Übergabetrichter gelangt.

Hingegen weisen die am Rohrmantel angeordneten Ablauföffnungen einen Gesamtquerschnitt auf, der nennenswert größer ist als der Querschnitt des zentralen Ablaufs und beispielsweise im Bereich des Querschnitts des Zuführrohrs liegen kann.

Die Ablauföffnungen im Rohrmantel des Zuführrohrs weisen vorzugsweise Kreisquerschnitt auf. Dadurch ist gewährleistet, daß das Schüttgut nicht nur in einer Vorzugsrichtung, sondern fächerartig ausläuft.

Die erfindungsgemäß ausgebildete Vorrichtung schafft ferner die Möglichkeit, mehrere Schüttgutkomponenten aus dem Übergabetrichter in gleichbleibender Verteilung der Abgabestelle zuzuführen. Zu diesem Zweck ist vorgesehen, daß die Hauptkomponente mit dem größten Massenanteil über das Zuführrohr und die weiteren getrennt dosierten Komponenten etwa radial in den Übergabetrichter oberhalb dessen geneigten Wänden zuführbar sind.

Durch diese Ausbildung ist gewährleistet, daß die weiteren Komponenten dort auf die Hauptkomponente treffen, wo sich diese aufgrund der geneigten Trichterwände in Bewegung befindet, so daß sich die weiteren Komponenten nicht auf dem Gutspiegel aufstauen können, sondern kontinuierlich mit der Hauptkomponente nach unten wandern.

Dies wird noch dadurch unterstützt, daß das Abgabeende des zuführrohrs unterhalb der Zuführung der weiteren Komponenten in dem Übergabetrichter angeordnet ist.

Die am Abgabeende des Zuführrohrs auslaufende Hauptkomponente stent sich im Übergabetrichter etwa unter dem Böschungswinkel der Hauptkomponente auf. Die weiteren Komponenten kafen auf den Böschungskegel auf und werden somit gleichmäßig nach unten abgezogen.

Nachstehend ist die Erfindung anhand eines in der Zeichnung wiedergegebenen Ausführungsbeispiels beschrieben. In der Zeichnung zeigen:
- Fig. 1: eine schematische Anlage zum Zuführen von drei verschiedenen Granulaten zu einem Extruder und
- Fig. 2: eine vergrößerte Ansicht des Übergabetrichters mit dem darüber befindlichen Wiegebehälter.

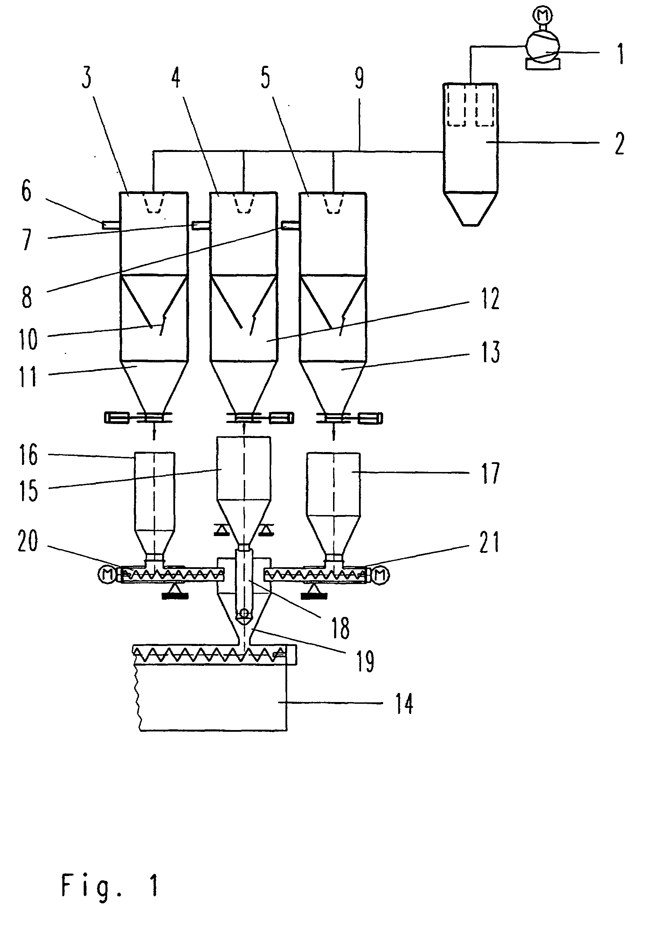

Figur 1 zeigt eine pneumatische Förderanlage mit einem Sauggebläse 1, einem Staubabscheider 2 und drei Produktabscheidern 3, 4, und 5, denen über die Förderleitungen 6, 7 und 8 drei verschiedene Komponenten, z.B. Kunststoffgranulate zugeführt werden können. Die Reinluftseite der Abscheider 3, 4, 5 ist über die Saugleitung 9 an den Staubascheider 2 angeschlossen. Die Abscheider 3, 4, 5 sind am unteren Ende mit einer Klappe 10 verschlossen, die mit einem Bedarfsmelder zusammenwirkt, über den bei Leerlaufen des Behälters Granulat nachgefordert wird. Die Verschlußklappe 10 öffnet jeweils in einen Zwischenbehälter 11, 12 bzw. 13.

Beim gezeigten Ausführungsbeispiel werden die verschiedenen drei Granulate einem Extruder 14 zugeführt, von denen die Hauptkomponente im mittleren Abscheider 4 und über den Zwischenbehälter 12 in einen Wiegebehälter 15 mit einem zulaufseitigen Verschluß gelangt. Die weiteren Komponenten mit geringerem Massenanteil werden in den Abscheidern 3 und 5 abgeschieden und gelangen über die Zwischenbehälter 11, 13 in die Behälter 16, 17.

An den Wiegebehälter 15 schließt ablaufseitig ein Zuführrohr 18 an, das in einen Übergabetrichter 19 mündet, der zugleich den Aufgabetrichter des Extruders 14 bildet. Die weiteren Komponenten, die in dem Behälter 16, 17 enthalten sind, werden aus diesem mittels Dosierschnecken 20, 21 abgezogen und etwa radial in den Übergabetrichter 19 eingespeist. Jeder Behälter 16, 17 mit Dosierschnecke 20, 21 sitzt gleichfalls auf einer in der Zeichnung nur angedeuteten Wiegeeinrichtung, die an die Massenerfassungseinrichtung angeschlossen ist.

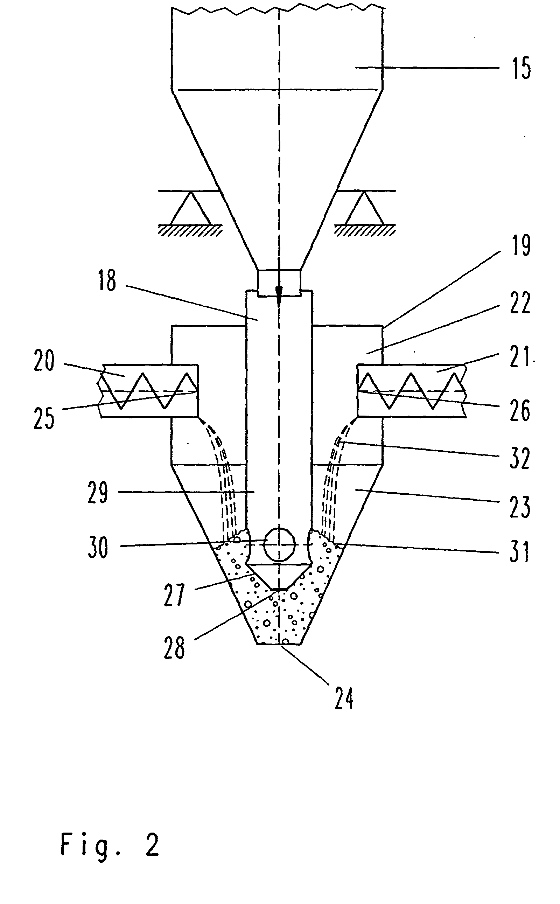

Fig. 2 zeigt den Übergabetrichter und die Schüttgut-Zuführung in vergrößerter Ansicht. Der Übergabetrichter 19 weist einen oberen zylindrischen Abschnitt 22 und daran anschließend einen trichterförmigen Abschnitt 23 mit der Abgabestelle 24 auf. In dem zylindrischen Abschnitt 22 sind die Dosierschnecken 20, 21 in den Übergabetrichter 19 hineingeführt derart, daß ihr Ablaufende 25 bzw. 26 oberhalb der geneigten Wände des trichterförmigen Abschnitts 23 liegt. Das Zuführrohr 18 ist am Abgabeende teilweise geschlossen, nämlich über einen konischen Abschnitt 27 zu einem zentralen Ablauf 28 eingezogen. Der Ablauf 28 weist einen Querschnitt auf, der nur einen Bruchteil des Querschnittes des Zuführrohrs 18 ausmacht. Unmittelbar oberhalb des konischen Einzugs 27 des Zuführrohrs 18 sind im Rohrmantel 29 in symmetrischer Verteilung Ablauföffnungen 30 in Form kreisförmiger Ausschnitte angeordnet, wobei der Querschnitt jeder Auslauföffnung 30 größer ist als der Querschnitt des zentralen Ablaufs 28.

Die vom Wiegebehälter 15 in das Zuführrohr 18 ablaufende Hauptkomponente des Schüttgutes wird durch den konischen Einzug 27 am Abgabeende des Zuführrors aufgestaut und läuft zum größten Teil über die im wesentlichen radialen Ablauföffnungen 30 in den trichterförmigen Abschnitt 23 des Übergabetrichters 19. In dem trichterförmigen Abschnitt 23 wird die Hauptkomponente aufgestaut, so daß sie einen Böschungskegel 31 bildet, auf den die beiden weiteren Komponenten, die über die Dosierschnecke 20, 21 zugeführt werden, auffallen, wie dies mit den gestrichelten Linien 32 angedeutet ist. Die beiden weiteren Komponenten werden beim Ablauf der Hauptkomponente nach unten zur Abgabestelle 24 mitgenommen.

## Patentansprüche

1. Vorrichtung zum Zuführen von Schüttgut zu einer Abgabestelle (24), bestehend aus einem Wiegebehälter (15) mit einer Massen-Erfassungseinrichtung und einem an den Auslauf des Wiegebehälters angeschlossenen Zuführrohr (18), das zentral in einen Übergabetrichter (19) mündet und an seinem Abgabeende zum Aufstauen und Umlenken des ablaufenden Schüttgutes nach außen eingerichtet ist, **dadurch gekennzeichnet, daß** das Zuführrohr (18) an seinem Abgabeende (27) zumindest teilweise geschlossen und an seinem darüber befindlichen Rohrmantel (29) mit Ablauföffnungen (30) versehen ist, die am Umfang gleichmäßig verteilt sind.

2. Vorrichtung nach Anspruch 1, **dadurch gekennzeichnet**, **dadurch gekennzeichnet, daß** das Zuführrohr (18) an seinem Abgabeende zu einem zentralen Ablauf (28) konisch eingezogen ist, wobei der Querschnitt des Ablaufs nennenswert kleiner ist als der Querschnitt des Zuführrohrs (18).

3. Vorrichtung nach Anspruch 1 oder 2, **dadurch gekennzeichnet, daß** der Querschnitt des Ablaufs (28) um wenigstens ein Drittel kleiner ist als der Querschnitt des Zuführrohrs (18).

4. Vorrichtung nach Anspruch 1 oder 2, **dadurch gekennzeichnet, daß** die am Rohrmantel (29) angeordneten Ablauföffnungen (20) einen Gesamtquerschnitt aufweisen, der nennenswert größer ist als der Querschnitt des zentralen Ablaufs (28).

5. Vorrichtung nach einem der Ansprüche 1 bis 4, **dadurch gekennzeichnet, daß** der Gesamtquerschnitt der Ablauföffnungen (28) im Bereich des Querschnitts des Zuführrohrs (18) liegt.

6. Vorrichtung nach einem der Ansprüche 1 bis 5, **dadurch gekennzeichnet, daß** die Ablauföffnungen (20) im Rohrmantel (29) des Zuführrohrs (18) einen Kreisquerschnitt aufweisen.

7. Vorrichtung nach Anspruch 1 zum chargenweisen Zuführen mehrerer Schüttgut-Komponenten, **dadurch gekennzeichnet, daß** die Hauptkomponente mit dem größten Massenanteil über das Zuführrohr (18) und die weiteren getrennt dosierten Komponenten etwa radial in den Übergabetrichter oberhalb dessen geneigten Wänden (23) zuführbar sind.

8. Vorrichtung nach einem der Ansprüche 1 bis 7, **dadurch gekennzeichnet, daß** das Abgabeende des Zuführrohrs (18) unterhalb der Zuführung (20, 21) der weiteren Komponenten in den Übergabetrichter (18) im Bereich dessen geneigten Wänden (23) angeordnet ist.

9. Vorrichtung nach einem der Ansprüche 1 bis 8, **dadurch gekennzeichnet, daß** der Übergabetrichter (19) so ausgebildet und die Zuführungen (20, 21) der weiteren Komponenten mit Bezug auf das Abgabeende des zentralen Zuführrohrs (18) so angeordnet sind, daß die weiteren Komponenten auf den sich im Übergabetrichter (19) bildenden Schüttgutkegel (31) der Hauptkomponente fallen.

## Claims

1. Apparatus for the supply of bulk material to a delivery station (24), comprising a weighing container (15) having a weight determination device and a supply pipe (18) connected to the outlet of the weighing container, issuing centrally into a transfer hopper (19) and outwardly oriented at its delivery end for accumulating and deflecting the outflowing bulk material,
**characterized in that** at its delivery end (27), the supply pipe (18) is at least partly closed and is provided on its superimposed tubular jacket (29) with uniformly circumferentially distributed discharge openings (30).

2. Apparatus according to claim 1, **characterized in that** at its delivery end, the supply pipe (18) is drawn in conically to a central outlet (28), whose cross-section is considerably smaller than the cross-section of the supply pipe (18).

3. Apparatus according to claim 1 or 2, **characterized in that** the cross-section of the outlet (28) is at least one third smaller than the cross-section of the supply pipe (18).

4. Apparatus according to claim 1 or 2; **characterized in that** the discharge openings (20) on the tubular jacket (29) have an overall cross-section which is considerably larger than the cross-section of the central outlet (28).

5. Apparatus according to one of the claims 1 to 4, **characterized in that** the overall cross-section of the discharge openings (20) is similar to the cross-section of the supply pipe (18).

6. Apparatus according to one of the claims 1 to 5, **characterized in that** the discharge openings (20) in the tubular jacket (29) of the supply pipe (18) have a circular cross-section.

7. Apparatus according to claim 1 for the batchwise supply of several bulk material components, **characterized in that** the main component with the largest weight proportion can be supplied by means of the supply pipe (18) and the further, separately dosed components roughly radially into the transfer hopper above the inclined walls (23) thereof.

8. Apparatus according to one of the claims 1 to 7, **characterized in that** the delivery end of the supply pipe (18) is positioned below the feeds (20, 21) for the further components into the transfer hopper (18) in the vicinity of the inclined walls (23) thereof.

9. Apparatus according to one of the claims 1 to 8, **characterized in that** the transfer hopper (19) is constructed in such a way and the feeds (20, 21) for the further components are so positioned with respect to the delivery end of the central supply pipe (18) that the further components fall onto the bulk material cone (31) of the main component forming in the transfer hopper (19).

## Revendications

1. Dispositif pour acheminer une matière en vrac à un endroit de déversement (24), constitué par un récipient de pesée (15) comprenant un mécanisme de détermination de la masse et par un tube d'acheminement (18) raccordé à la sortie du récipient de pesée, qui débouche en position centrale dans un entonnoir de versement (19) et qui est orienté vers l'extérieur à son extrémité de déversement afin de conférer un remous et une déviation à la matière en vrac en train de s'évacuer, **caractérisé en ce que** le tube d'acheminement (18) est fermé au moins en partie à son extrémité de déversement (27) et est muni d'ouvertures d'évacuation (30) sur son enveloppe tubulaire (29) disposée par-dessus, lesdites ouvertures étant réparties de manière uniforme sur la périphérie.

2. Dispositif selon la revendication 1, **caractérisé en ce que** le tube d'acheminement (18) est soumis à une réduction conique du diamètre à son extrémité de déversement en direction jusqu'à obtenir une évacuation centrale (28), la section transversale de l'évacuation étant essentiellement inférieure à la section transversale du tube d'acheminement (18).

3. Dispositif selon la revendication 1 ou 2, **caractérisé en ce que** la section transversale de l'évacuation (28) est inférieure à la section transversale du tube d'acheminement (18), à concurrence d'au moins un tiers de cette dernière.

4. Dispositif selon la revendication 1 ou 2, **caractérisé en ce que** les ouvertures d'évacuation (20) disposées sur l'enveloppe tubulaire (29) présentent une section transversale totale qui est essentiellement supérieure à la section transversale de l'évacuation centrale (28).

5. Dispositif selon l'une quelconque des revendications 1 à 4, **caractérisé en ce que** la section transversale totale des ouvertures d'évacuation (28) se situe dans la plage de la section transversale du tube d'acheminement (18).

6. Dispositif selon l'une quelconque des revendications 1 à 5, **caractérisé en ce que** les ouvertures d'évacuation (20) dans l'enveloppe tubulaire (29) du tube d'acheminement (18) présentent une section transversale circulaire.

7. Dispositif selon la revendication 1, pour l'acheminement par lots de plusieurs composants de matière en vrac, **caractérisé en ce que** le composant principal possédant la fraction massique supérieure peut être acheminé via le tube d'acheminement (18) et les autres composants introduits via un dosage séparé peuvent être acheminés en position approximativement radiale dans un entonnoir de versement, au-dessus des parois inclinées (23) de ce dernier.

8. Dispositif selon l'une quelconque des revendications 1 à 7, **caractérisé en ce que** l'extrémité de déversement du tube d'acheminement (18) est disposée en dessous de l'acheminement (20, 21) des autres composants dans l'entonnoir de versement (18) dans la zone de ses parois inclinées (23).

9. Dispositif selon l'une quelconque des revendications 1 à 8, **caractérisé en ce que** l'entonnoir de versement (19) est réalisé et les acheminements (20, 21) des autres composants sont disposés, par rapport à l'extrémité de déversement du tube d'acheminement central (18), de telle sorte que les autres composants tombent sur le cône de matière en vrac (31) du composant principal qui se forme dans l'entonnoir de versement (19).
